# EUROPEAN PATENT SPECIFICATION

(11) **EP 2 457 457 B1**
(45) Date of publication and mention of the grant of the patent: **22.01.2014**
(21) Application number: 11190288.8
(22) Date of filing: 23.11.2011
(51) Int. Cl.: A41H 43/04, B29C 65/52, D06H 5/00, A41D 27/24

(54) **Cloth bonding apparatus and bonding method**
Vorrichtung und Verfahren zum Verbinden vom Stoff
Appareil et procédé de liaison de tissus

(30) Priority: 25.11.2010 JP 2010261909
(43) Date of publication of application: 30.05.2012
(73) Proprietor: Brother Kogyo Kabushiki Kaisha, Nagoya-shi, Aichi 467-8561 (JP)
(72) Inventor: Yamaura, Hiroki, Nagoya-shi, Aichi 467-8562 (JP); Umeda, Kazutoshi, Nagoya-shi, Aichi 467-8562 (JP); Iwakoshi, Hiroyasu, Nagoya-shi, Aichi 467-8562 (JP); Minagawa, Yuichiro, Nagoya-shi, Aichi 467-8562 (JP); Enya, Tetsuji, Nagoya-shi, Aichi 467-8562 (JP); Nemoto, Yoshimitsu, Nagoya-shi, Aichi 467-8562 (JP); Nishimura, Kazuto, Nagoya-shi, Aichi 467-8562 (JP); Horibe, Yoshihiko, Nagoya-shi, Aichi 467-8562 (JP)
(74) Representative: Prüfer & Partner GbR European Patent Attorneys

(56) References cited:
- EP-A1- 2 216 162
- EP-A1- 2 216 164
- EP-A1- 2 216 165
- EP-A1- 2 233 278
- US-A- 2 655 980
- US-A- 2 664 938
- US-A1- 2003 010 439

## Description

The present invention relates to a cloth bonding apparatus that bonds a cloth to a cloth, and to a bonding method.

A cloth bonding apparatus is an apparatus that bonds a cloth to a cloth with an adhesive instead of sewing the cloths together with a needle and a thread. When sewing the cloth to the cloth using the thread, the thread appears on the cloth surface and unevenness occurs. As the cloth bonding apparatus bonds the cloth and the cloth with the adhesive, it is possible to inhibit unevenness from occurring. After processing by the cloth bonding apparatus, the surface of the cloth is smooth. Therefore, the cloth bonding apparatus can create clothing etc. that causes no discomfort when touched by skin.

With a cloth bonding apparatus disclosed in Japanese Laid-Open Patent Publication No. 2010-180486, when an operator depresses a pedal, a liquid adhesive is discharged from a nozzle and attaches to a cloth. The operator overlays another cloth on the cloth to which the adhesive is attached. A roller of the cloth bonding apparatus presses and transports both the cloths and thus bonds the cloth to the other cloth.

### SUMMARY

When the operator performs a bonding operation using the above-described apparatus, it is necessary to operate the pedal by foot. When the operator is not accustomed to the operation, the operator cannot perform a delicate operation of the pedal and it is not possible to perform a detailed bonding operation.

EP 2 216 165 A1 discloses a generic cloth bonding apparatus and bonding method according to the preambles of claims 1 and 8, respectively.

Other cloth bonding apparatuses and bonding methods are known from EP 2 216 164 A1; EP 2 233 278 A1; US 2,664,938 A; US 2003/010439 A1; and US 2,655,980 A.

It is an object of the present invention to provide a cloth bonding apparatus and a bonding method that allow a detailed bonding operation to be performed.

A cloth bonding apparatus comprises a nozzle that discharges adhesive onto a cloth, a supply portion that supplies the adhesive to the nozzle, a transport portion that presses and transports the cloth, a first operation portion that is operated by foot by an operator, a second operation portion that is operated by hand by the operator, a first determination portion that determines whether the operator is operating the first operation portion, a first drive portion that, when the first determination portion determines that the operator is operating the first operation portion, drives the supply portion and the transport portion in accordance with a degree of operation of the first operation portion, a second determination portion that determines whether the operator is operating the second operation portion, and a second drive portion that, when the first determination portion determines that the operator is not operating the first operation portion and the second determination portion determines that the operator is operating the second operation portion, drives the supply portion and the transport portion based on drive conditions of the supply portion and the transport portion that are stored in a storage portion.

As the operator can manually operate the second operation portion, the operator can perform a delicate operation with respect to the second operation portion. Thus, the operator can perform a detailed bonding operation by easily controlling the driving of the supply portion and the transport portion. When the operator has operated the second operation portion, the cloth bonding apparatus drives the supply portion and the transport portion based on the drive conditions that are stored in the storage portion. The driving of the supply portion and the transport portion does not depend on a degree of operation of the second operation portion. Thus, even the operator who is not accustomed to the operation can reliably perform the detailed bonding operation.

In the cloth bonding apparatus, the transport portion may press and transport the cloth on a downstream side of the nozzle in a transport direction of the cloth. The cloth bonding apparatus may further comprise a detection portion that detects the cloth on the upstream side of the nozzle in the transport direction of the cloth, a third drive portion that, after a state in which the detection portion detects the cloth changes to a state in which the detection portion does not detect the cloth, drives the supply portion and supplies the adhesive to the nozzle, and also drives the transport portion and transports the cloth by a first distance, and a stop portion that, after the third drive portion has driven the transport portion and transported the cloth by the first distance, stops the driving of the supply portion and stops the supply of the adhesive to the nozzle, and also stops the driving of the transport portion and stops the movement of the cloth. Thus, even when a position at which the detection portion detects the cloth is separated from the nozzle, the cloth bonding apparatus can discharge the adhesive up to the edge of the cloth, and can prohibit the discharge of the adhesive in a state in which there is no cloth. As a result, the cloth bonding apparatus can inhibit the adhesive from attaching to a bed portion.

The cloth bonding apparatus may further comprise a third determination portion that determines whether the operator is operating at least one of the first operation portion and the second operation portion. During a period in which the third determination portion determines that the operator is operating at least one of the first operation portion and the second operation portion, the third drive portion may drive the supply portion and supply the adhesive to the nozzle and also drive the transport portion and move the cloth by the first distance. The cloth bonding apparatus can drive the supply portion and the transport portion during the period in which the operator is operating at least one of the first operation portion and the second operation portion. Therefore, even after the change to the state in which the cloth is not detected by the detection portion, the operator can perform the bonding operation at a speed that corresponds to the operation of one of the first operation portion and the second operation portion.

In the cloth bonding apparatus, when the third determination portion determines that the operator is operating the first operation portion, the third drive portion may drive the supply portion and the transport portion in accordance with the degree of operation of the first operation portion, and when the third determination portion determines that the operator is operating the second operation portion, the third drive portion may drive the supply portion and the transport portion based on the drive conditions that are stored in the storage portion. The operator can transport and bond the cloth at a desired transport speed by operating the first operation portion. The operator can transport and bond the cloth constantly at a uniform transport speed by operating the second operation portion. As a result, the operator can switch an operation method in accordance with a degree of proficiency with respect to the operation, and even the operator who is not accustomed to the operation can reliably bond the cloth up to the edge.

The cloth bonding apparatus may further comprise a fourth drive portion that, after the stop portion stops the driving of the supply portion and stops the supply of the adhesive to the nozzle, once more starts driving of the transport portion and transports the cloth by a second distance. The fourth drive portion transports the cloth by the second distance in a state in which the discharge of the adhesive is prohibited. Thus, the cloth bonding apparatus can reliably press the cloth up to the edge and bond the cloth to another cloth.

In the cloth bonding apparatus, during a period in which the third determination portion determines that the operator is operating at least one of the first operation portion and the second operation portion, the fourth drive portion may drive the transport portion and transports the cloth by the second distance. The cloth bonding apparatus can drive the transport portion during the period in which the operator is operating at least one of the first operation portion and the second operation portion. Therefore, after the cloth has moved by the first distance, the operator can freely adjust a speed of the bonding operation.

In the cloth bonding apparatus, when the third determination portion determines that the operator is operating the first operation portion, the fourth drive portion may drive the supply portion and the transport portion in accordance with the degree of operation of the first operation portion, and when the third determination portion determines that the operator is operating the second operation portion, the fourth drive portion may drive the supply portion and the transport portion based on the drive conditions that are stored in the storage portion. The operator can transport and bond the cloth at a desired transport speed by operating the first operation portion. The operator can transport and bond the cloth constantly at a uniform transport speed by operating the second operation portion. As a result, the operator can switch an operation method in accordance with a degree of proficiency with respect to the operation, and even the operator who is not accustomed to the operation can reliably bond the cloth up to the edge.

A bonding method comprises the steps of determining whether an operator is operating a first operation portion that is operated by foot, driving a supply portion that supplies adhesive to a nozzle and a transport portion that transports a cloth, when it is determined that the operator is operating the first operation portion, determining whether the operator is operating a second operation portion that is operated by hand, acquiring drive conditions that are stored in a storage portion; and driving the supply portion and the transport portion based on the drive conditions acquired from the storage portion, when it is determined that the operator is not operating the first operation portion and it is determined that the operator is operating the second operation portion.

As the operator can manually operate the second operation portion, the operator can control the supply portion and the transport portion in a desired manner. The operator can therefore perform a detailed operation with respect to the second operation portion and can thus perform a detailed bonding operation. When the operator has operated the second operation portion, the cloth bonding apparatus drives the supply portion and the transport portion based on the drive conditions that are stored in the storage portion. The driving of the supply portion and the transport portion does not depend on a degree of operation of the second operation portion. As a result, the cloth bonding apparatus can reliably perform the detailed bonding operation even when the operator is not accustomed to the operation.

### BRIEF DESCRIPTION OF THE DRAWINGS

Exemplary embodiments will be described below in detail with reference to the accompanying drawings in which:
FIG. 1 is an oblique view of a cloth bonding apparatus 1;
FIG. 2 is an oblique view of a bonding device 2;
FIG. 3 is a left side view of the bonding device 2;
FIG. 4 is a perspective view of an internal structure of the bonding device 2;
FIG 5 is a curved cross sectional view in the direction of arrows of a line I-I in FIG. 2;
FIG. 6 is a block diagram of an electrical configuration of the cloth bonding apparatus 1;
FIG. 7 is an oblique view of the vicinity of a nozzle 45 at a time of a bonding operation;
FIG. 8 is a diagram showing a parameter table 991;
FIG. 9 is a flowchart of normal bonding processing;
FIG. 10 is a flowchart of end edge bonding processing;
FIG. 11 is a flowchart of automatic processing;
FIG. 12 is a flowchart of semi-automatic processing;
FIG. 13 is a flowchart of manual processing;
FIG. 14 is a flowchart of manual processing according to a modified example;
   and
FIG. 15 is a flowchart of manual processing according to the modified example.

### DETAILED DESCRIPTION OF THE EXEMPLARY EMBODIMENTS

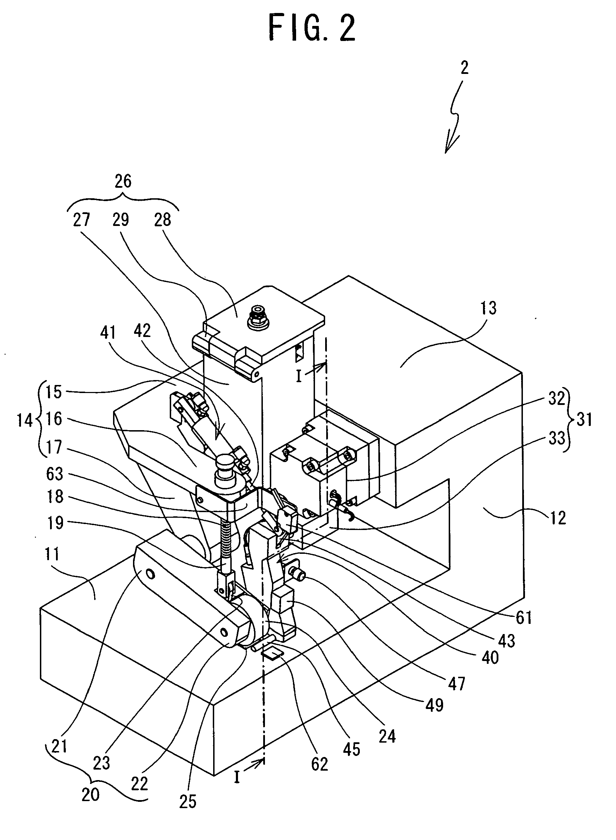

A cloth bonding apparatus 1 of the present invention will be explained with reference to the drawings. The upper side, the lower side, the right diagonal upper side, the left diagonal lower side, the right diagonal lower side and the left diagonal upper side in FIG. 2 respectively correspond to the upper side, the lower side, the right side, the left side, the front side and the rear side of a bonding device 2.

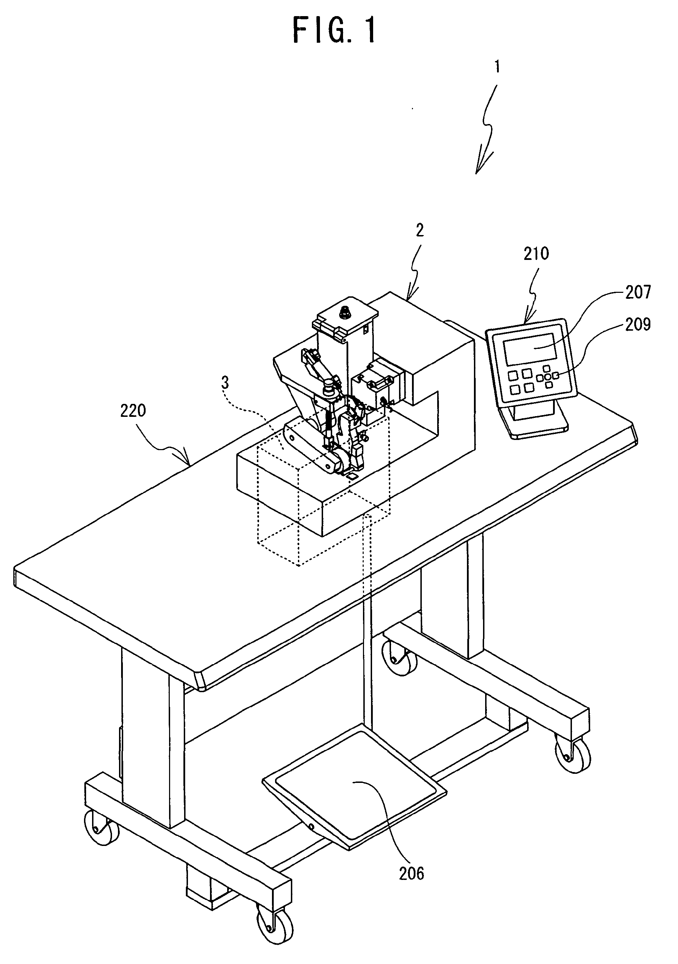

A structure of the cloth bonding apparatus 1 will be explained with reference to FIG. 1. The cloth bonding apparatus 1 is provided with the bonding device 2 and a table 220. The bonding device 2 is fixed on the table 220. The bonding device 2 attaches adhesive between two layers of cloth that are arranged facing each other, and presses and transports the cloth. The two layers of cloth are bonded to each other by undergoing the above-described operation. A structure of the bonding device 2 will be described in more detail later.

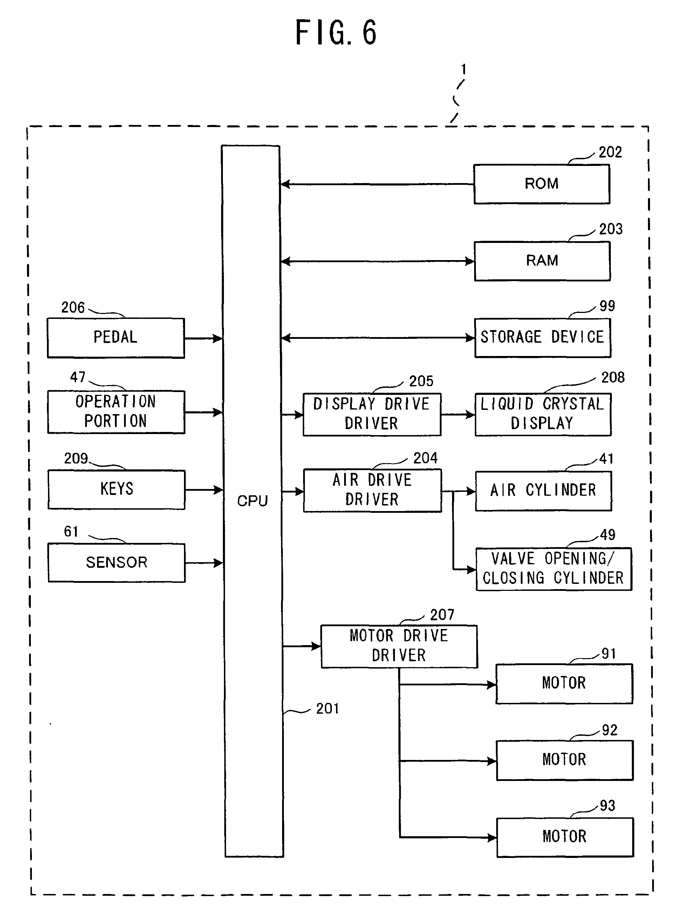

The table 220 is provided with an operation panel 210 on the right side of the bonding device 2. The operation panel 210 is provided with a liquid crystal display 208 and a plurality of keys 209. The liquid crystal display 208 displays a variety of information. The keys 209 perform various inputs. An operator operates the keys 209 while viewing the liquid crystal display 208 and thus sets various operations of the cloth bonding apparatus 1. A pedal 206 is rotatably supported on a lower edge of the table 220. The operator can adjust a transport speed of the cloth by adjusting an amount of depression of the pedal 206. A control box 3 is provided on the rear surface of the table 220. The control box 3 accommodates a control board on which is mounted a CPU 201 (refer to FIG. 6) and the like. The control box 3 is electrically connected to the bonding device 2, the operation panel 210 and the pedal 206.

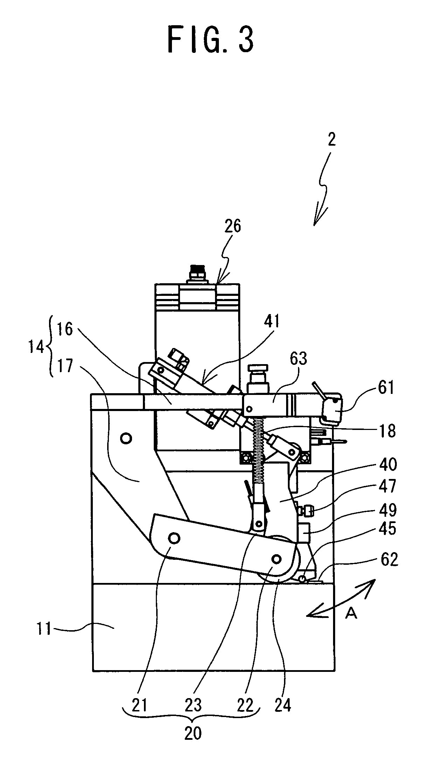

The structure of the bonding device 2 will be explained with reference to FIG. 2 and FIG. 3. The bonding device 2 is provided with a bed portion 11, a pillar portion 12 and an arm portion 13. The bed portion 11 has a substantially cubic shape. The pillar portion 12 extends vertically upward from the right end of the bed portion 11. The arm portion 13 is connected to the upper end of the pillar portion 12, and projects toward the left from the left side face of the pillar portion 12. A left end portion of the arm portion 13 supports a pump casing 31, a storage chamber 26 and a beam portion 14, in order starting from the front.

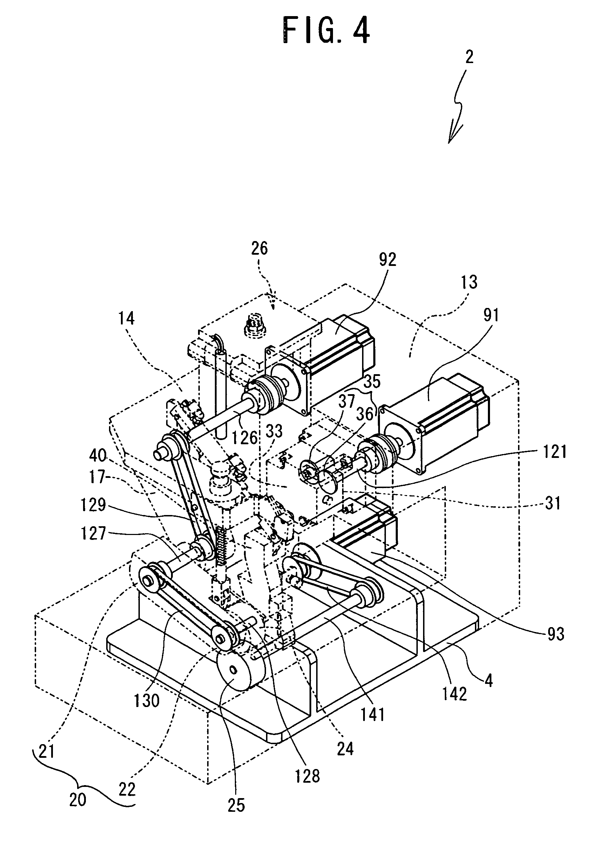

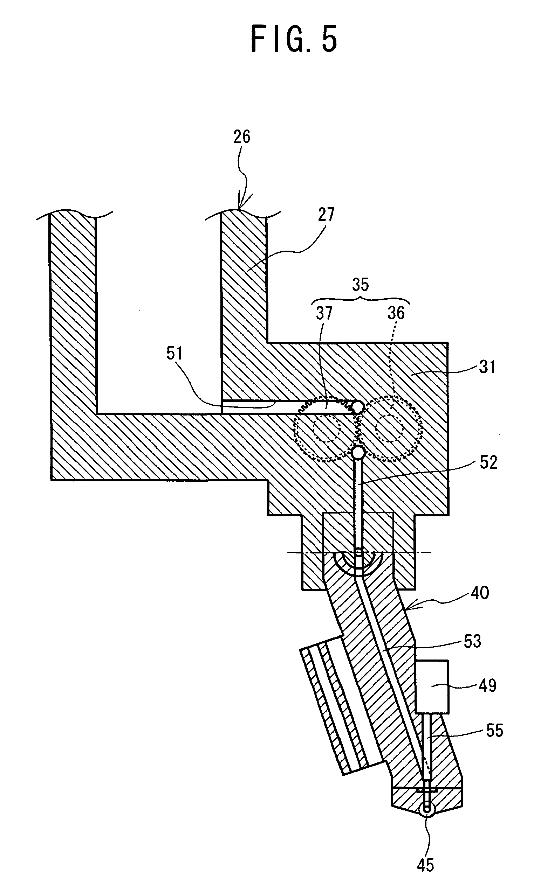

The pump casing 31 is provided with a first pump casing 32 and a second pump casing 33. The first pump casing 32 is fixed to the left side face of the arm portion 13. A gear pump 35 (refer to FIG. 4 and FIG. 5) is provided inside the first pump casing 32. The gear pump 35 supplies an appropriate amount of the adhesive at a high level of accuracy to a nozzle 45. The second pump casing 33 extends downward from the bottom left edge face of the first pump casing 32. An axis portion is provided on the left side of the second pump casing 33. The axis portion is connected to the top edge on the right side of a support portion 40 such that the support portion 40 is swingably supported. The pump casing 31 is provided with a first flow channel 51 and a second flow channel 52 (refer to FIG. 5) that will be described later.

The support portion 40 has a substantially cubic shape. A slight gap is provided between the lower edge of the support portion 40 and the bed portion 11. The nozzle 45 is provided on the lower edge of the support portion 40. The nozzle 45 extends to the left side from the support portion 40. A drive transmission portion 43 is provided on the upper edge of the support portion 40. The drive transmission portion 43 supports a movable portion 42 of an air cylinder 41. When the movable portion 42 of the air cylinder 41 moves back and forth, the support portion 40 swings in the front-rear direction (in the direction of arrows A shown in FIG. 3) with the axis portion of the upper edge of the support portion 40 as the center axis. In accordance with the swinging of the support portion 40, the nozzle 45 moves to a position at a time of performing a cloth bonding operation and a position at a time of performing maintenance.

The nozzle 45 is cylindrically shaped. The nozzle 45 is provided with a discharge opening that discharges the adhesive. When the operator performs the cloth bonding operation, the discharge opening faces the bed portion 11. When the bonding operation is performed, the operator inserts the nozzle 45 between two layers of cloth that are arranged facing each other. The gear pump 35 supplies the adhesive to the nozzle 45 via a third flow channel 53 (refer to FIG. 5) inside the support portion 40. The nozzle 45 discharges the adhesive onto the cloth from the discharge opening. The adhesive attaches to the surface of the cloth that is positioned underneath the nozzle 45.

An operation portion 47 is provided substantially in the center of the support portion 40 in the up-down direction. The operation portion 47 is a button switch. The operator can perform the bonding operation by pressing the operation portion 47. The operation portion 47 is electrically connected to the control box 3. A valve opening/closing cylinder 49 is provided on the front of the support portion 40. The valve opening/closing cylinder 49 operates a valve 55 (refer to FIG. 5) that is used to block the third flow channel 53 (refer to FIG. 5).

The storage chamber 26 has a substantially cubic shape. The storage chamber 26 extends upward from the left side of the arm portion 13 and the rear side portion of the pump casing 31. The storage chamber 26 is provided with a main body 27, a lid portion 28 and a lid axis portion 29. The main body 27 has a bottomed tubular shape, of which the upper portion is open. The lid portion 28 covers the upper portion opening of the main body 27. The lid axis portion 29 is provided on the upper edge of the main body 27. The lid axis portion 29 supports the lid portion 28 such that the lid portion 28 can be opened and closed. The storage chamber 26 stores the adhesive inside the main body 27. The storage chamber 26 supplies the stored adhesive to the nozzle 45 as necessary.

The beam portion 14 is provided with a body portion 15, a spring support portion 16, and a column portion 17. The body portion 15 extends in a horizontal direction to the left from the left rear edge of the arm portion 13. The spring support portion 16 is plate-shaped and extends in a horizontal direction toward the front from the left end of the body portion 15. The column portion 17 extends diagonally downward toward the front from the body portion 15 at an angle of approximately 45 degrees from the horizontal plane. The lower end of the column portion 17 is separated from the bed portion 11.

The spring support portion 16 has a hole in its front end portion. The spring support portion 16 supports a shaft portion 19 such that the shaft portion 19 can move up and down. The shaft portion 19 is inserted through a spring 18. The upper end portion of the shaft portion 19 is inserted into the hole in the spring support portion 16. A plate-shaped fixing jig 63 is provided on the front edge of the spring support portion 16. The rear edge portion of the fixing jig 63 is connected to the left side edge of the spring support portion 16. The fixing jig 63 extends toward the front, is bent to the right at the front end and then extends to the right. The fixing jig 63 is then bent toward the front at its right end, and extends toward the front. A sensor 61 is provided on the front edge portion of the fixing jig 63. The sensor 61 is provided with a light radiating portion and a light detection portion. A reflecting plate 62 is provided on the bed portion 11 that is close to and in front of the nozzle 45. The light radiating portion of the sensor 61 irradiates light toward a substantially center position of the reflecting plate 62 in the front-rear direction. The reflecting plate 62 reflects the light irradiated from the sensor 61. The light detection portion of the sensor 61 detects the light reflected from the reflecting plate 62. The bonding device 2 uses the sensor 61 to determine whether the cloth is above the reflecting plate 62.

A shaft that extends in the left-right direction is provided on the left side of the lower end of the column portion 17. The shaft supports a rear end portion 21 of a roller holding portion 20. The roller holding portion 20 can pivot around the shaft such that a front end portion 22 moves in the up-down direction. On the body portion 15, the air cylinder 41 is provided on the right side of the spring support portion 16. The air cylinder 41 switches a position of the support portion 40.

The front end portion 22 of the roller holding portion 20 rotatably supports a cylindrical upper feed roller 24. The upper feed roller 24 is positioned close to and to the rear of the nozzle 45. The roller holding portion 20 has a shaft support portion 23 to the front and on the upper surface. The shaft support portion 23 supports the shaft portion 19. The spring 18 occupies the space between the spring support portion 16 and the lower portion of the shaft portion 19. The spring 18 energizes the roller holding portion 20 downward by energizing the shaft portion 19, to which the roller holding portion 20 is connected, downward.

An internal structure of the bonding device 2 will be explained with reference to FIG. 4. The bonding device 2 is provided with motors 91 to 93 and the like in its interior. The motor 91 drives the gear pump 35 by transmitting a rotational driving force to the gear pump 35 via a rotating shaft 121. The gear pump 35 is provided with a gear 36 and a gear 37. The gear 36 rotates along with the rotating shaft 121. The gear 37 meshes with the gear 36. The gear 36 and the gear 37 supply an appropriate amount of the adhesive to the nozzle 45.

The motor 92 drives the upper feed roller 24 by transmitting a rotational driving force to the upper feed roller 24 via rotating shafts 126 to 128 and belts 129 and 130. The upper feed roller 24 rotates due to the rotation of the motor 92. The motor 93 drives a lower feed roller 25 by transmitting a rotational driving force to the lower feed roller 25 via a rotating shaft 141 and a belt 142. The lower feed roller 25 has a cylindrical shape and is fixed to the rotating shaft 141. The lower feed roller 25 is positioned below the upper feed roller 24 and inside the bed portion 11. The lower feed roller 25 rotates due to the rotation of the motor 93.

The flow channels of the adhesive will be explained with reference to FIG. 5. The main body 27 of the storage chamber 26 has a peripheral wall and a bottom wall. The main body 27 stores the adhesive in a space encompassed by the peripheral wall and the bottom wall. The first flow channel 51 is a through hole that extends from the peripheral wall on the storage chamber 26 side toward the pump casing 31. The first flow channel 51 is a passage that feeds the adhesive stored in the main body 27 to the gear pump 35. The first flow channel 51 leads from the storage chamber 26 to a center inside the first pump casing 32 of the pump casing 31 side. In the center section inside the first pump casing 32, the first flow channel 51 is bent at a right angle toward the right, and leads to a position above a section at which the drive gear 36 and the driven gear 37 mesh together.

The second flow channel 52 is a passage that feeds the adhesive that has passed through the pump casing 35 to the third flow channel 53 of the support portion 40. The second flow channel 52 extends to the left from the lower edge of the section at which the drive gear 36 and the driven gear 37 mesh together. The second flow channel 52 that extends to the left is bent downward at the left edge, and its lower edge is bent to the left, reaching inside the upper edge of the support portion 40. The third flow channel 53 is a passage that feeds the adhesive that has flowed through the second flow channel 52 to the nozzle 45. The third flow channel 53 extends from the upper edge to the lower edge inside the support portion 40, and is connected to the nozzle 45. The valve 55 is provided on the lower edge of the third flow channel 53. The valve opening/closing cylinder 49 opens or closes the third flow channel 53 by opening and closing the valve 55.

The electrical configuration of the cloth bonding apparatus 1 will be explained with reference to FIG. 6. The cloth bonding apparatus 1 is provided with the CPU 201, a ROM 202, a RAM 203 and a storage device 99. The CPU 201 performs reception processing and control processing. The reception processing is processing in which input information from the keys 209 and the pedal 206 etc. is received. The control processing is processing that controls the motors etc. The ROM 202 stores programs executed by the CPU 201 and various initial setting parameters etc. The RAM 203 temporarily stores a timer value, a counter value, flags and so on. The storage device 99 stores at least a parameter table, rotational speeds of the motors 91, 92 and 93 and operation modes, which will be explained later. The CPU 201 is electrically connected to each of the ROM 202, the RAM 203 and the storage device 99.

The pedal 206 is electrically connected to the CPU 201. The operator uses the pedal 206 when adjusting a transport speed of the cloth. The CPU 201 recognizes an amount of depression of the pedal 206. The operation portion 47 is electrically connected to the CPU 201. The operator performs the bonding operation by operating the pedal 206 and the operation portion 47.

The keys 209 are electrically connected to the CPU 201. The operator uses the keys 209 when inputting parameters stored in a parameter table, a rotational speed of the motors 91, 92 and 93, and an operation mode, which will be explained later. The CPU 201 recognizes a state of depression of the keys 209 by the operator. The CPU 201 stores the input information in the storage device 99, based on the state of depression of the keys 209 recognized by the CPU 201.

The sensor 61 is electrically connected to the CPU 201. When the light detection portion of the sensor 61 detects the reflected light, the CPU 201 determines that the cloth is not above the reflecting plate 62. When the light detection portion of the sensor 61 does not detect the reflected light, the CPU 201 determines that the cloth is above the reflecting plate 62.

A display drive driver 205 is electrically connected to the CPU 201. The display drive driver 205 is electrically connected to the liquid crystal display 208. The CPU 201 displays selected information on the liquid crystal display 208 via the display drive driver 205.

An air drive driver 204 is electrically connected to the CPU 201. The air cylinder 41 and the valve opening/closing cylinder 49 are each electrically connected to the air drive driver 204. The CPU 201 controls a pressure of air fed into the air cylinder 41 and the valve opening/closing cylinder 49 via the air drive driver 204.

A motor drive driver 207 is electrically connected to the CPU 201. The motors 91 to 93 are each electrically connected to the motor drive driver 207. The CPU 201 controls the motors 91 to 93 via the motor drive driver 207.

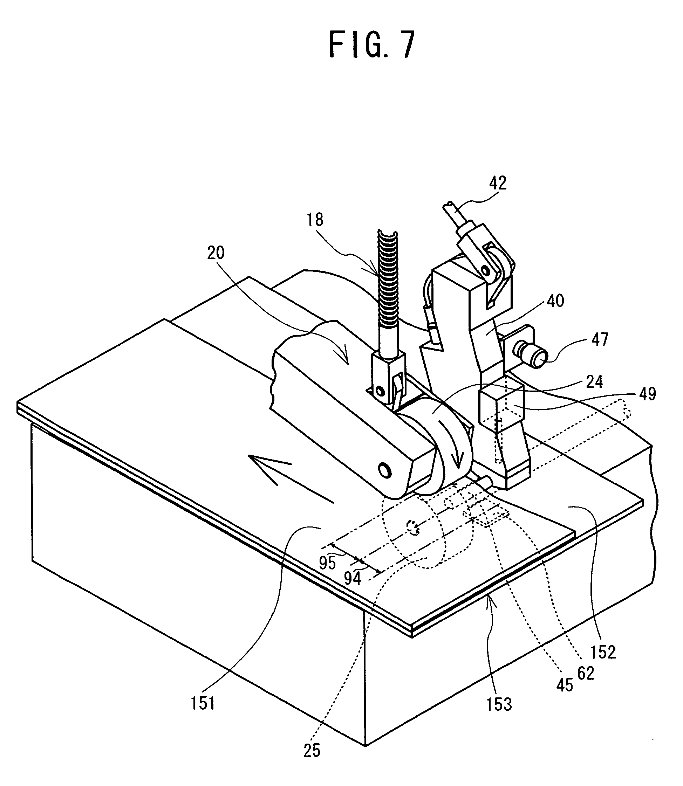

Operations of the bonding device 2 at the time of the bonding operation to bond an upper cloth 151 and a lower cloth 152 will be explained with reference to FIG. 7. When the bonding operation is performed, the bonding device 2 moves the movable portion 42 of the air cylinder 41 (refer to FIG. 2) to the front, and thus moves the support portion 40 to a position of use. The operator arranges the upper cloth 151 and the lower cloth 152 to overlap with each other. The operator arranges the nozzle 45 on a section of the cloth to be bonded. The upper feed roller 24 and the lower feed roller 25 sandwich the upper cloth 151 and the lower cloth 152 at the rear of the nozzle 45.

The operator operates the pedal 206 (refer to FIG. 1) or the operation portion 47 to perform the bonding operation. The operator depresses the pedal 206 or presses the operation portion 47 to rotate the gear pump 35 (refer to FIG. 4 and FIG. 5). The adhesive is discharged downward from the discharge opening of the nozzle 45 via the flow channels 51 to 53 (refer to FIG. 5), and attaches to the lower cloth 152. The upper feed roller 24 and the lower feed roller 25 rotate in a direction such that the upper cloth 151 and the lower cloth 152 move from the front to the rear. The spring 18 energizes the upper feed roller 24 downward. Therefore, the upper feed roller 24 and the lower feed roller 25 press the upper cloth 151 onto the lower cloth 152 to which the adhesive is attached, and thus bond the upper cloth 151 and the lower cloth 152.

When the operator depresses the pedal 206, the transport speed of the cloth changes depending on the amount of depression of the pedal 206. When the operator presses the operation portion 47, the transport speed of the cloth is constant. Thus, by the operator using either the pedal 206 or the operation portion 47 in accordance with the content of the bonding operation, it is possible to transport the cloth in the desired manner and perform the bonding operation.

As the bonding operation proceeds, an edge portion (hereinafter referred to as a cloth edge) 153, which is upstream in the transport direction of the upper cloth 151 and the lower cloth 152, moves to the rear. When the cloth edge 153 passes above the reflecting plate 62, the sensor 61 (refer to FIG. 2) changes from a state in which the cloth is detected to a state in which the cloth is not detected. When the sensor 61 changes from the state in which the cloth is detected to the state in which the cloth is not detected, the cloth bonding apparatus 1 determines that the cloth edge 153 has been detected. When the cloth bonding apparatus 1 detects the cloth edge 153, the upper feed roller 24 and the lower feed roller 25 are driven in the following manner such that the upper cloth 151 and the lower cloth 152 are reliably bonded up to the cloth edge 153.

The position on which the sensor 61 irradiates the light is a substantially center position of the reflecting plate 62 in the front-rear direction. The nozzle 45 is separated by a distance 94 from the substantially center position, in the front-rear direction, of the reflecting plate 62. Even after the cloth bonding apparatus 1 has detected the cloth edge 153, the upper feed roller 24 and the lower feed roller 25 are rotated and transport the upper cloth 151 and the lower cloth 152 by the distance 94. The cloth edge 153 moves from a position above the substantially center position, in the front-rear direction, of the reflecting plate 62 to a position below the nozzle 45. The cloth bonding apparatus 1 continuously discharges the adhesive from the nozzle 45, and thus the adhesive attaches up to the cloth edge 153 of the lower cloth 152. Hereinafter, a period during which the cloth edge 153 moves from the position above the substantially center position, in the front-rear direction, of the reflecting plate 62 to the position below the nozzle 45 is referred to a "first period."

After the cloth bonding apparatus 1 has transported the upper cloth 151 and the lower cloth 152 by the distance 94, the cloth bonding apparatus 1 stops the discharge of the adhesive from the nozzle 45. A section at which the upper feed roller 24 is in contact with the upper cloth 151 is separated from the nozzle 45 by a distance 95. The cloth bonding apparatus 1 rotates the upper feed roller 24 and the lower feed roller 25 and transports the upper cloth 151 and the lower cloth 152 by the distance 95. The cloth edge 153 moves from a position below the nozzle 45 to a position below the upper feed roller 24. The upper feed roller 24 and the lower feed roller 25 press the upper cloth 151 and the lower cloth 152 up to the cloth edge 153. The lower cloth 152 is already not below the nozzle 45, but as the discharge of the adhesive from the nozzle 45 is stopped, the adhesive does not attach to the bed portion 11. The cloth bonding apparatus 1 can inhibit the adhesive from attaching to the bed portion 11, and can also reliably press the upper cloth 151 and the lower cloth 152 up to the cloth edge 153. Hereinafter, a period during which the cloth edge 153 moves from the position under the nozzle 45 to the position under the upper feed roller 24 is referred to as a "second period."

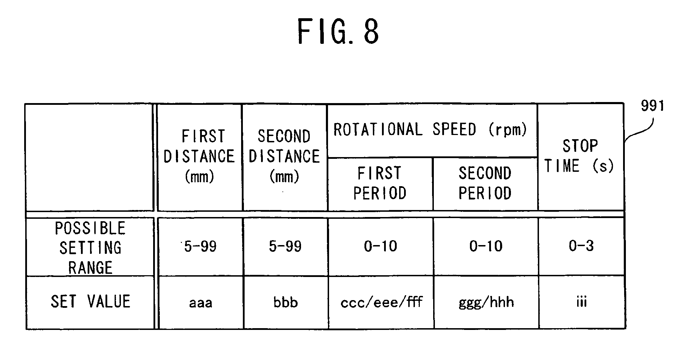

A parameter table 991, which is an example of a parameter table stored in the storage device 99, will be explained with reference to FIG. 8. The parameter table 991 stores a first distance, a second distance, rotational speeds of the motors 91 to 93 corresponding to the first period and to the second period, and a stop time. The first distance corresponds to the distance 94 (refer to FIG. 7). The second distance corresponds to the distance 95 (refer to FIG. 7). The rotational speeds corresponding to the first period are the rotational speeds, respectively, of the motors 91 to 93 that rotate during the first period. Hereinafter, the rotational speeds of the motors 91 to 93 that rotate during the first period are collectively referred to as a "first rotational speed." The rotational speeds corresponding to the second period are the rotational speeds, respectively, of the motors 92 and 93 that rotate during the second period. Hereinafter, the rotational speeds of the motors 92 and 93 that rotate during the second period are collectively referred to as a "second rotational speed." The stop time will be described later. The operator can operate the keys 209 to input and change the parameters that are stored in the parameter table 991. The cloth bonding apparatus 1 stores the parameters input by the operator via the keys 209 in the parameter table 991.

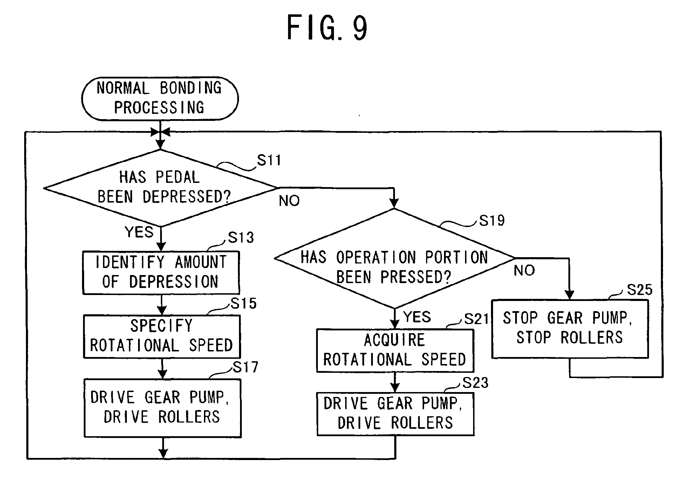

Normal bonding processing and end edge bonding processing of the cloth bonding apparatus 1 will be explained with reference to FIG. 9 to FIG. 13. The normal bonding processing is processing to perform the normal bonding operation. The end edge bonding processing is processing to perform the bonding operation in the vicinity of the cloth edge. When the operator performs an operation via the keys 209 to start the bonding operation, the CPU 201 activates and executes the normal bonding processing and the end edge bonding processing. The CPU 201 executes the normal bonding processing and the end edge bonding processing in parallel.

The normal bonding processing will be explained with reference to FIG. 9. The CPU 201 determines whether the operator has depressed the pedal 206 (step S 11). When the CPU 201 determines that the operator has depressed the pedal 206 (yes at step S 11), the CPU 201 identifies the amount of depression of the pedal 206 (step S13). The CPU 201 specifies the transport speed of the cloth based on the amount of depression of the pedal 206. The greater the amount of depression of the pedal 206, the faster the transport speed becomes. The smaller the amount of depression of the pedal 206, the slower the transport speed becomes. Based on the amount of depression of the pedal 206, the CPU 201 specifies a discharge amount that is an amount of adhesive per unit time. The greater the amount of depression of the pedal 206, the larger the discharge amount of the adhesive per unit time. The smaller the amount of depression of the pedal 206, the smaller the discharge amount of the adhesive per unit time. The CPU 201 specifies the rotational speeds of the motors 92 and 93 when transporting the cloth at the specified transport speed (step S15). The CPU 201 specifies the rotational speed of the motor 91 when discharging the adhesive from the nozzle 45 at the specified discharge amount of the adhesive per unit time (step S15).

The CPU 201 drives the gear pump 35 by rotating the motor 91 at the specified rotational speed. The CPU 201 drives the upper feed roller 24 and the lower feed roller 25 by rotating the motors 92 and 93 at the specified rotational speeds (step S 17). The upper cloth 151 and the lower cloth 152 move at a speed in accordance with the amount of depression of the pedal 206. The adhesive is discharged from the nozzle 45 at a discharge amount in accordance with the amount of depression of the pedal 206. The processing returns to step S 11.

When the CPU 201 determines that the pedal 206 has not been depressed by the operator (no at step S11), the CPU 201 determines whether the operator has pressed the operation portion 47 (step S19). When the CPU 201 determines that the operator has pressed the operation portion 47 (yes at step S 19), the CPU 201 reads out and acquires the rotational speeds of the motors 91 to 93 from the storage device 99 (step S21). The CPU 201 rotates the motor 91 at the acquired rotational speed and thus drives the gear pump 35. The CPU 201 rotates the motors 92 and 93 at the acquired rotational speeds and thus drives the upper feed roller 24 and the lower feed roller 25 (step S23). The upper cloth 151 and the lower cloth 152 move at a constant speed. The adhesive is discharged from the nozzle 45 at a constant discharge amount. The processing returns to step S11.

When the CPU 201 determines that the operator has not pressed the operation portion 47 (no at step S 19), the CPU 201 stops the rotation of the motor 91 and stops the driving of the gear pump 35 (step S25). The CPU 201 stops the rotation of the motors 92 and 93 and stops the driving of the upper feed roller 24 and the lower feed roller 25 (step S25). The upper cloth 151 and the lower cloth 152 stop. The adhesive is not discharged from the nozzle 45. The processing returns to step S11.

The operator can manually operate the operation portion 47 in the above-described manner, and can thus perform a detailed operation with respect to the operation portion 47. The operator can drive the gear pump 35, the upper feed roller 24, and the lower feed roller 25 in a desired manner and can thus perform a detailed bonding operation. When the operator performs an operation with respect to the operation portion 47, the gear pump 35, the upper feed roller 24, and the lower feed roller 25 are driven at a constant speed. Thus, the operator who is not accustomed to the operation can reliably perform the detailed bonding operation.

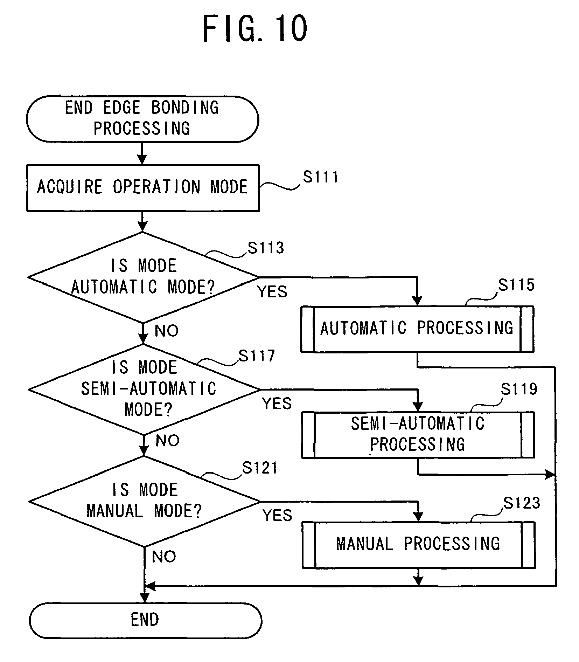

The end edge bonding processing will be explained with reference to FIG. 10 to FIG. 13. Before the operator starts the bonding operation, the operator inputs an operation mode (one of an automatic mode, a semi-automatic mode and a manual mode) via the keys 209. In the automatic mode, the cloth bonding apparatus 1 automatically performs the bonding operation during the first period and during the second period, without relying on the operation of the pedal 206 or the operation portion 47. In the semi-automatic mode, the cloth bonding apparatus 1 performs the bonding operation during the first period in accordance with the operation of the pedal 206 and the operation portion 47, and automatically performs the bonding operation during the second period, without relying on the operation of the pedal 206 or the operation portion 47. In the manual mode, the cloth bonding apparatus 1 performs the bonding operation during the first period and the second period based on the operation of the pedal 206 and the operation portion 47.

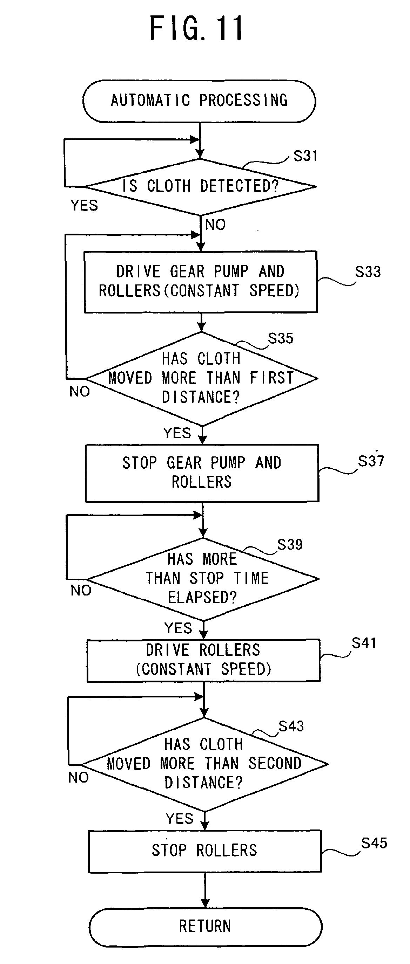

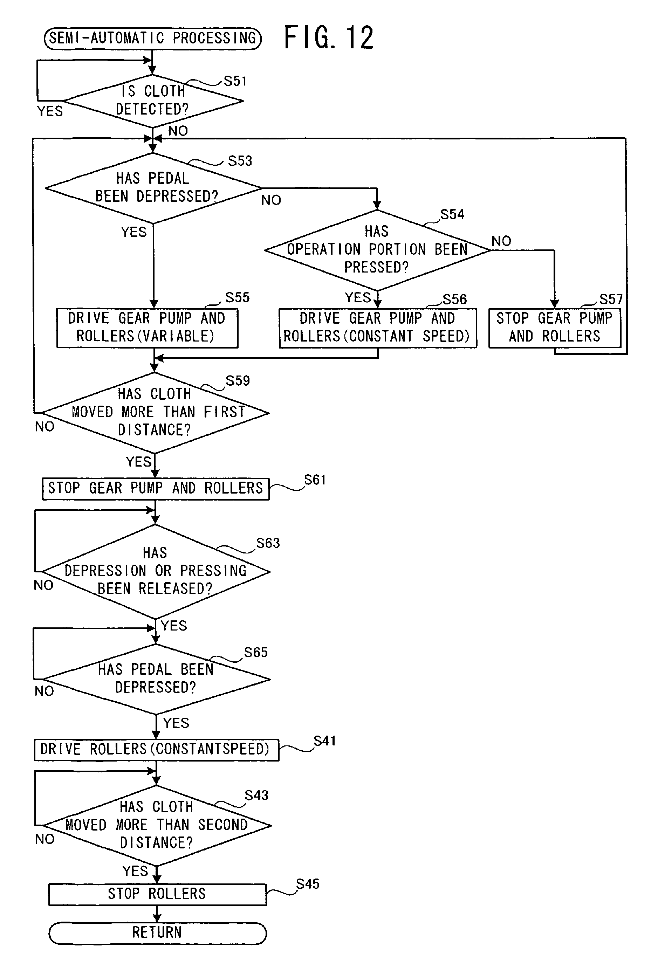

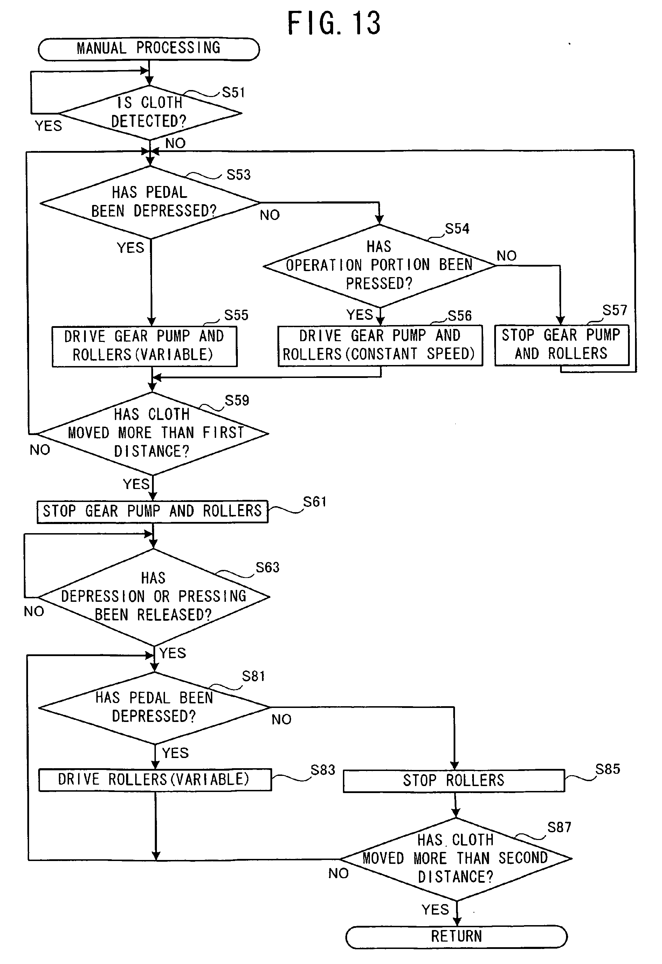

As shown in FIG. 10, the CPU 201 reads out and acquires the operation mode stored in the storage device 99 (step S111). When the acquired operation mode is the automatic mode (yes at step S113), the CPU 201 executes automatic processing (refer to FIG. 11) (step S115). After the automatic processing ends, the end edge bonding processing ends. When the acquired operation mode is the semi-automatic mode (no at step S113, yes at step S117), the CPU 201 executes semi-automatic processing (refer to FIG. 12) (step S119). After the semi-automatic processing ends, the end edge bonding processing ends. When the acquired operation mode is the manual mode (no at step S117, yes at step S121), the CPU 201 executes manual processing (refer to FIG. 13) (step S123). After the manual processing ends, the end edge bonding processing ends. When the operation mode acquired by the CPU 201 does not correspond to any of the above-described modes (no at step S121), the end edge bonding processing ends.

The automatic processing will be explained with reference to FIG. 11. The CPU 201 reads out and acquires, from the parameter table 991 stored in the storage device 99, the first distance, the second distance, the first rotational speed, the second rotational speed, and the stop time. The CPU 201 determines whether the sensor 61 is detecting the cloth (step S31). When the CPU 201 determines that the sensor 61 is detecting the cloth (yes at step S31), the processing returns to step S31. By the CPU 201 executing the normal bonding processing (refer to FIG. 9), the gear pump 35, the upper feed roller 24, and the lower feed roller 25 are driven (refer to FIG. 9, step S 17 and step S23), and the cloth moves to the rear. When the cloth edge 153 (refer to FIG. 7) passes above the substantially center position, in the front-rear direction, of the reflecting plate 62, the CPU 201 determines that the sensor 61 is not detecting the cloth (no at step S31). The CPU 201 rotates the motors 91, 92 and 93 at the first rotational speed. The gear pump 35, the upper feed roller 24, and the lower feed roller 25 are driven at a constant speed (step S33). The adhesive is discharged from the nozzle 45 at a constant amount and attaches to the cloth. The upper feed roller 24 and the lower feed roller 25 transport the cloth at a constant speed, press the cloth and bond it.

The CPU 201 determines whether the upper feed roller 24 and the lower feed roller 25 have transported the cloth by the first distance from a time at which the CPU 201 determines that the sensor 61 is not detecting the cloth (step S35). When the transport distance of the cloth is less than the first distance, from the time at which the CPU 201 determines that the sensor 61 is not detecting the cloth (no at step S35), the processing returns to step S33. When the transport distance of the cloth is equal to or more than the first distance, from the time at which the CPU 201 determines that the sensor 61 is not detecting the cloth (yes at step S35), the rotation of the motors 91 to 93 is stopped. The gear pump 35, the upper feed roller 24, and the lower feed roller 25 stop (step S37). The discharge of the adhesive from the nozzle 45 is stopped. The cloth stops in a state in which the cloth edge 153 is in a position below the nozzle 45. The cloth bonding apparatus 1 reliably attaches the adhesive up to the cloth edge 153 by transporting the cloth by the first distance from when the cloth edge 153 passes over the substantially center position, in the front-rear direction, of the reflecting plate 62, and by discharging the adhesive from the nozzle 45.

The CPU 201 monitors an elapsed time from when the rotation of the motors 91 to 93 is stopped (step S39). When the elapsed time is less than the stop time (no at step S39), the processing returns to step S39. When the elapsed time is equal to or greater than the stop time (yes at step S39), the CPU 201 rotates the motors 92 and 93 at the second rotational speed. The upper feed roller 24 and the lower feed roller 25 are driven at a constant speed (step S41). The upper feed roller 24 and the lower feed roller 25 transport the cloth at a constant speed, and press and bond the cloth up to the cloth edge 153. As the cloth edge 153 has already passed below the nozzle 45, the cloth is not underneath the nozzle 45. However, as the discharge of the adhesive is stopped, the adhesive does not attach to the bed portion 11.

The CPU 201 determines whether the upper feed roller 24 and the lower feed roller 25 have transported the cloth by the second distance from when the driving of the upper feed roller 24 and the lower feed roller 25 is re-started at step S41 (step S43). When the transport distance of the cloth from when the driving of the upper feed roller 24 and the lower feed roller 25 is re-started is less than the second distance (no at step S43), the processing returns to step S43. When the transport distance of the cloth becomes equal to or greater than the second distance from when the driving of the upper feed roller 24 and the lower feed roller 25 is re-started (yes at step S43), the CPU 201 stops the rotation of the motors 92 and 93. The upper feed roller 24 and the lower feed roller 25 stop (step S45). The cloth stops in a state in which the cloth edge 153 is in a position below the upper feed roller 24. By transporting the cloth by the second distance from when the cloth edge 153 passes below the nozzle 45, the cloth bonding apparatus 1 causes the upper feed roller 24 and the lower feed roller 25 to reliably press the cloth up to the cloth edge 153. The automatic processing ends, and the processing returns to the end edge bonding processing (refer to FIG. 10).

As described above, in the automatic mode, even when the reflecting plate 62 is separated from the nozzle 45, the cloth bonding apparatus 1 reliably discharges the adhesive to the cloth edge 153 of the cloth, and presses and bonds the cloth. In a state after the cloth is no longer below the nozzle 45, the cloth bonding apparatus 1 stops the discharge of the adhesive. Thus, the cloth bonding apparatus 1 can inhibit the adhesive from attaching to the bed portion 11. By automatically performing the bonding operation during the first period and the second period, the cloth bonding apparatus 1 can reliably bond the cloth edge 153 without an operation by the operator.

The semi-automatic processing will be explained with reference to FIG. 12. Processing that is the same as that of the above-described automatic processing is assigned the same reference numeral, and an explanation is omitted or simplified. The CPU 201 determines whether the sensor 61 is detecting the cloth (step S51). When the CPU 201 determines that the sensor 61 is detecting the cloth (yes at step S51), the processing returns to step S51. By the CPU 201 executing the normal bonding processing (refer to FIG. 9), the gear pump 35, the upper feed roller 24, and the lower feed roller 25 are driven (refer to FIG. 9, step S17 and step S23), and the cloth moves to the rear. When the cloth edge 153 passes above the substantially center position, in the front-rear direction, of the reflecting plate 62, the CPU 201 determines that the sensor 61 is not detecting the cloth (no at step S51).

The CPU 201 determines whether the operator is depressing the pedal 206 (step S53). When the CPU 201 determines that the operator is depressing the pedal 206 (yes at step S53), the CPU 201 identifies the amount of depression of the pedal 206. The CPU 201 specifies the rotational speed of the motors 91 to 93 based on the amount of depression of the pedal 206. The CPU 201 rotates the motors 91 to 93 at the specified rotational speeds and thus drives the gear pump 35, the upper feed roller 24, and the lower feed roller 25 (step S55). The amount of adhesive that is in accordance with the amount of depression of the pedal 206 is discharged from the nozzle 45 and attaches to the cloth. The upper feed roller 24 and the lower feed roller 25 transport the cloth at the speed that is in accordance with the amount of depression of the pedal 206 and press the cloth.

The CPU 201 determines whether the upper feed roller 24 and the lower feed roller 25 have transported the cloth by the first distance from a time at which the CPU 201 determines that the sensor 61 is not detecting the cloth (step 59). When the transport distance of the cloth is less than the first distance, from the time at which the CPU 201 determine that the sensor 61 is not detecting the cloth (no at step S59), the processing returns to step S53. When the CPU 201 determines that the transport distance of the cloth is less than the first distance and that the operator is not depressing the pedal 206 (no at step S53), the CPU 201 determines whether the operator has pressed the operation portion 47 (step S54). When the CPU 201 determines that the operator is pressing the operation portion 47 (yes at step S54), the CPU 201 rotates the motors 91 to 93 at the first rotational speed. The gear pump 35, the upper feed roller 24, and the lower feed roller 25 are driven at a constant speed (step S56). The adhesive is discharged from the nozzle 45 at a constant amount and attaches to the cloth. The upper feed roller 24 and the lower feed roller 25 transport the cloth at a constant speed, and press and bond the cloth. The processing advances to step S59. When the CPU 201 determines that the operator is not pressing the operation portion 47 (no at step S54), the CPU 201 stops the rotation of the motors 91 to 93. The gear pump 35, the upper feed roller 24, and the lower feed roller 25 stop (step S57). The processing returns to step S53. When the transport distance of the cloth becomes equal to or more than the first distance, from the time at which it is determined that the sensor 61 is not detecting the cloth (yes at step S59), the processing advances to step S61.

When the transport distance of the cloth becomes equal to or greater than the first distance, the CPU 201 stops the rotation of the motors 91 to 93. The gear pump 35, the upper feed roller 24, and the lower feed roller 25 stop (step S61). The cloth stops in a state in which the cloth edge 153 is in a position below the nozzle 45. The CPU 201 determines whether the depression of the pedal 206 or the pressing of the operation portion 47 has been released by the operator (step S63). When the CPU 201 determines that the operator is continuing the depression of the pedal 206 or that the operator is continuing the pressing of the operation portion 47 (no at step S63), the processing returns to step S63. When the CPU 201 determines that the depression of the pedal 206 or the pressing of the operation portion 47 has been released by the operator (yes at step S63), the CPU 201 determines whether the operator has once more depressed the pedal 206 (step S65). When the CPU 201 determines that the operator has not once more depressed the pedal 206 (no at step S65), the processing returns to step S65. When the CPU 201 determines that the operator has once more depressed the pedal 206 (yes at step S65), the CPU 201 drives the motors 92 and 93 at the second rotational speed. The upper feed roller 24 and the lower feed roller 25 rotate at a constant speed (step S41). The motor 91 does not rotate, and thus the gear pump 35 is not driven and the adhesive is not discharged from the nozzle 45.

The CPU 201 determines whether the upper feed roller 24 and the lower feed roller 25 have transported the cloth by the second distance from when the driving of the upper feed roller 24 and the lower feed roller 25 is re-started at step S41 (step S43). When the transport distance of the cloth becomes equal to or greater than the second distance from when the driving of the upper feed roller 24 and the lower feed roller 25 is re-started (yes at step S43), the CPU 201 stops the rotation of the motors 92 and 93. The upper feed roller 24 and the lower feed roller 25 stop (step S45). The cloth stops in a state in which the cloth edge 153 is in a position below the upper feed roller 24. Thus, the upper feed roller 24 and the lower feed roller 25 reliably press the cloth up to the cloth edge 153. The semi-automatic processing ends and the processing returns to the end edge bonding processing (refer to FIG. 10).

As described above, in the semi-automatic mode, the operator can perform the bonding operation during the first period in accordance with the operation of the pedal 206 or of the operation portion 47. The operator can adjust the transport speed of the cloth during the first period using the amount of depression of the pedal 206. As a result, the operator can perform the bonding operation over a desired time period and at a desired transport speed. When the cloth edge 153 moves close to the nozzle 45, the upper cloth 151 and the lower cloth 152 (refer to FIG. 7) are easily displaced. However, as the operator can transport the cloth over the desired time period and at the desired transport speed, the operator can reliably perform the bonding operation while pressing by hand such that the upper cloth 151 and the lower cloth 152 are not displaced. As the cloth bonding apparatus 1 automatically performs the bonding operation during the second period, the cloth edge 153 can be reliably bonded without the need for an operation by the operator. The processing may go to the step S41 after detecting the pressing of the operation portion 47 at step S65.

The manual processing will be explained with reference to FIG. 13. Processing that is the same as that of the above-described semi-automatic processing is assigned the same reference numeral, and an explanation is simplified. The CPU 201 determines whether the sensor 61 is detecting the cloth (step S51). When the CPU 201 determines that the sensor 61 is not detecting the cloth (no at step S51), the CPU 201 determines whether the operator is depressing the pedal 206 (step S53). When the CPU 201 determines that the operator is depressing the pedal 206 (yes at step S53), the CPU 201 rotates the motors 91 to 93 at a rotational speed corresponding to the amount of depression of the pedal 206. An amount of adhesive that corresponds to the amount of depression of the pedal 206 is discharged from the nozzle 45 and attaches to the cloth. The upper feed roller 24 and the lower feed roller 25 transport the cloth at a speed that corresponds to the amount of depression of the pedal 206 (step S55) and press the cloth. When the CPU 201 determines that the operator is pressing the operation portion 47 (no at step S53, yes at step S54), the CPU 201 rotates the motors 91 to 93 at the first rotational speed. The gear pump 35, the upper feed roller 24, and the lower feed roller 25 are driven at a constant speed (step S56).

The CPU 201 determines whether the upper feed roller 24 and the lower feed roller 25 have transported the cloth by the first distance from the time at which the CPU 201 determines that the sensor 61 is not detecting the cloth (step S59). When the transport distance of the cloth becomes equal to or greater than the first distance (yes at step S59), the CPU 201 stops the rotation of the motors 91 to 93, and the gear pump 35, the upper feed roller 24, and the lower feed roller 25 stop (step S61). The CPU 201 waits on stand-by until the depression of the pedal 206 or the pressing of the operation portion 47 is released by the operator (step S63). When the CPU 201 determines that the depression of the pedal 206 or the pressing of the operation portion 47 has been released by the operator (yes at step S63), the CPU 201 determines whether the operator has once more depressed the pedal 206 (step S81). When the CPU 201 determines that the operator is once more depressing the pedal 206 (yes at step S81), the CPU 201 identifies the rotational speed of the motors 92 and 93 based on the amount of depression of the pedal 206. The CPU 201 rotates the motors 92 and 93 at the identified rotational speed and drives the upper feed roller 24 and the lower feed roller 25 (step S83). The upper feed roller 24 and the lower feed roller 25 transport the cloth at a speed that corresponds to the amount of depression of the pedal 206 and then press the cloth. As the motor 91 does not rotate, the gear pump 35 is not driven and the adhesive is not discharged from the nozzle 45. As the cloth edge 153 has already passed below the nozzle 45, the cloth is not underneath the nozzle 45. However, as the discharge of the adhesive is stopped, the adhesive does not attach to the bed portion 11. The processing returns to step S81.

When the CPU 201 determines that the operator has not depressed the pedal 206 (no at step S81), the CPU 201 stops the rotation of the motors 92 and 93. The upper feed roller 24 and the lower feed roller 25 stop (step S85). The CPU 201 determines whether the upper feed roller 24 and the lower feed roller 25 have transported the cloth by the second distance from when the driving of the upper feed roller 24 and the lower feed roller 25 is re-started at step S83 (step S87). When the transport distance of the cloth from when the driving of the upper feed roller 24 and the lower feed roller 25 is re-started is less than the second distance (no at step S87), the processing returns to step S81. When the transport distance of the cloth becomes equal to or greater than the second distance from when the driving of the upper feed roller 24 and the lower feed roller 25 is re-started (yes at step S87), the manual processing ends and the processing returns to the end edge bonding processing (refer to FIG. 10).

As described above, in the manual mode, the operator can perform the bonding operation during the first period and the second period, using a timing at which the pedal 206 is depressed or a timing at which the operation portion 47 is pressed. The operator can adjust the discharge amount of the adhesive and the transport speed of the cloth depending on the amount of depression of the pedal 206. The operator can perform the bonding operation at a specific transport speed in accordance with the pressing of the operation portion 47. Thus, the operator can perform the bonding operation while freely transporting the cloth. When the cloth edge 153 passes below the nozzle 45, the pressure at which the nozzle 45 presses the cloth is no longer applied, and it is easy for the upper cloth 151 and the lower cloth 152 to be displaced. However, the operator can transport the cloth at a desired timing and transport speed, and can thus perform the bonding operation while pressing such that the upper cloth 151 and the lower cloth 152 are not displaced.

Various modifications can be made to the present invention, in addition to the above-described embodiment. The position at which the operation portion 47 is provided is not limited to the support portion 40. The cloth bonding apparatus 1 may be provided with a plurality of the operation portions 47 and a different rotational speed may be allocated to each of the operation portions 47. When the gear pump 35 is stopped, the cloth bonding apparatus 1 may simultaneously close the valve 55 and block off the third flow channel 53.

In the semi-automatic mode, the cloth bonding apparatus 1 may swap over control of the first period and control of the second period. At the above-described time, the cloth bonding apparatus 1 drives the gear pump 35, the upper feed roller 24, and the lower feed roller 25 during the second period in accordance with the amount of depression of the pedal 206 or with the pressing of the operation portion 47.

The operation portion 47 may be provided with an LED. The LED may be extinguished during the first period, for example, and may be illuminated during the second period. The cloth bonding apparatus 1 can notify the operator of an operation status. Thus, the operator can perform the bonding operation while easily ascertaining the operation status.

The cloth bonding apparatus 1 may additionally be provided with an operation member (a button switch, for example) that issues a command to approve or prohibit the supply of the adhesive. The cloth bonding apparatus 1 may drive the upper feed roller 24 and the lower feed roller 25 in accordance with the amount of depression of the pedal 206 and stop the supply of the adhesive when the operator operates the operation member to prohibit the supply of the adhesive. It is preferable for the operation member to be disposed in the vicinity of the operation portion 47. The operation member may be provided with an LED. The LED may be illuminated, for example, when the cloth bonding apparatus 1 is prohibiting the supply of the adhesive. When the operator manually performs the normal bonding operation, the approval and prohibition of the supply of the adhesive can be switched as appropriate. The operator can easily ascertain the operation status by seeing whether the LED is illuminated or extinguished.

The LED of the operation portion 47 and the LED of the operation member may be caused to flash. The LED that can emit a plurality of colors may be used and may emit a different color depending on the operation status. A light generator other than the LED may be used.

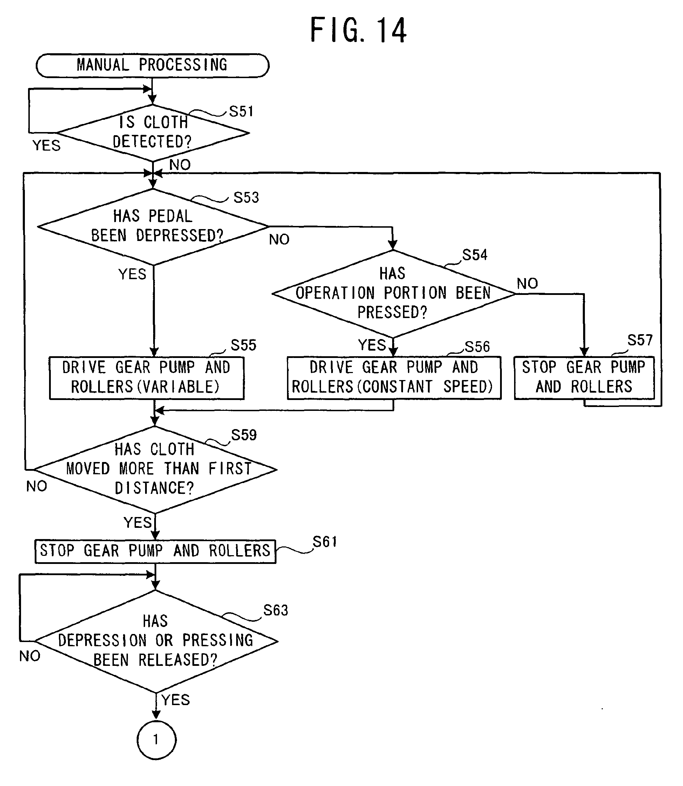

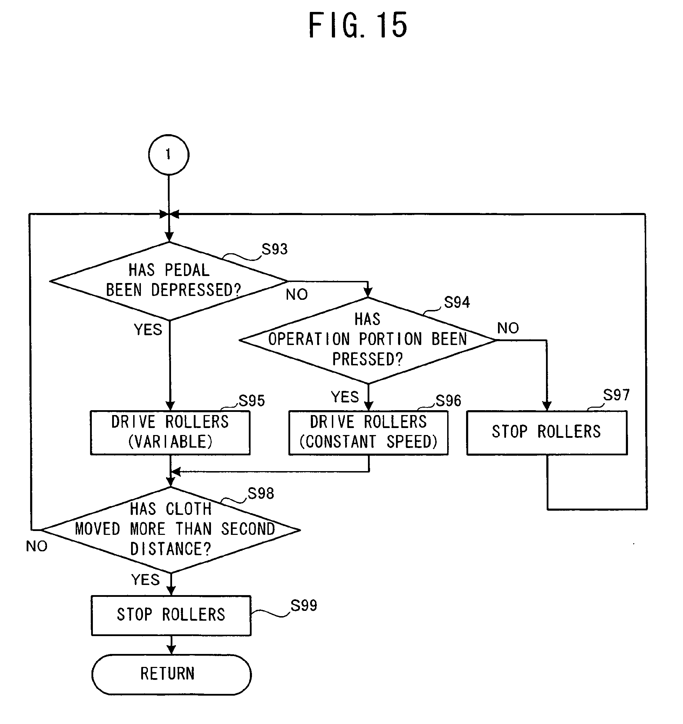

A modified example of the manual processing will be explained with reference to FIG. 14 and FIG. 15. The processing shown in FIG. 14 is the same as the manual processing described above, and thus the same reference numerals are assigned and an explanation is omitted. As shown in FIG. 15, after the cloth is transported by the first distance, the CPU 201 determines whether the operator is depressing the pedal 206 (step S93). When the CPU 201 determines that the operator is depressing the pedal 206 (yes at step S93), the CPU 201 rotates the motors 92 and 93 at the rotational speed that corresponds to the amount of depression of the pedal 206. The upper feed roller 24 and the lower feed roller 25 transport the cloth at a speed that corresponds to the amount of depression of the pedal 206 and press the cloth (step S95). The processing advances to step S98. When the CPU 201 determines that the operator is pressing the operation portion 47 (no at step S93, yes at step S94), the CPU 201 rotates the motors 92 and 93 at the second rotational speed. The upper feed roller 24 and the lower feed roller 25 are driven at a constant speed (step S96). The processing advances to step S98. When the CPU 201 determines that the operator is not depressing the operation portion 47 (no at step S94), the CPU 201 stops the rotation of the motors 92 and 93. The upper feed roller 24 and the lower feed roller 25 stop (step S97). The processing returns to step S93.

The CPU 201 determines whether the upper feed roller 24 and the lower feed roller 25 have transported the cloth by the second distance from the time at which the driving of the upper feed roller 24 and the lower feed roller 25 is re-started at step S95 or at step S96 (step S98). When the transport distance of the cloth is less than the second distance from when the driving of the upper feed roller 24 and the lower feed roller 25 is re-started (no at step S98), the processing returns to step S93. When the transport distance of the cloth becomes equal to or more than the second distance, from the time at which the driving of the upper feed roller 24 and the lower feed roller 25 is re-started (yes at step S98), the CPU 201 stops the rotation of the motors 92 and 93. The upper feed roller 24 and the lower feed roller 25 stop (step S99). The cloth stops in a state in which the cloth edge 153 is in a position below the upper feed roller 24. By transporting the cloth by the second distance from when the cloth edge 153 passes below the nozzle 45, the cloth bonding apparatus 1 causes the upper feed roller 24 and the lower feed roller 25 to reliably press the cloth up to the cloth edge 153. The manual processing ends, and the processing returns to the end edge bonding processing (refer to FIG. 10).

The gear pump 35 shown in FIG. 4 and in FIG. 5 corresponds to a supply portion of the present invention. The upper feed roller 24 and the lower feed roller 25 shown in FIG. 4 correspond to a transport portion of the present invention. The pedal 206 shown in FIG. 1 corresponds to a first operation portion of the present invention and the operation portion 47 corresponds to a second operation portion of the present invention. The CPU 201 that performs the processing at step S11 shown in FIG. 9 corresponds to a first determination portion of the present invention, the CPU 201 that performs the processing at step S 17 corresponds to a first drive portion of the present invention, the CPU 201 that performs the processing at step S 19 corresponds to a second determination portion of the present invention, the CPU 201 that performs the processing at step S21 corresponds to an acquisition portion of the present invention, and the CPU 201 that performs the processing at step S23 corresponds to a second drive portion of the present invention. The sensor 61 shown in FIG. 2 corresponds to a detection portion of the present invention. The CPU 201 that performs the processing at step S33 shown in FIG. 11, and at step S55 shown in FIG. 12 and FIG. 13 corresponds to a third drive portion of the present invention. The CPU 201 that performs the processing at step S37 shown in FIG. 11 and at step S61 shown in FIG. 12 and FIG. 13 corresponds to a stop portion of the present invention. The CPU 201 that performs the processing at step S95 and step S96 shown in FIG. 15 corresponds to a fourth drive portion of the present invention. The CPU 201 that performs the processing at step S53 and step S54 shown in FIG. 12 and FIG. 13, and the processing at step S93 and step S94 shown in FIG. 15 corresponds to a third determination portion of the present invention.

## Claims

1. A cloth bonding apparatus comprising:
a nozzle (45) that discharges adhesive onto a cloth;
a supply portion (35) that supplies the adhesive to the nozzle (45);
a transport portion (24, 25) that presses and transports the cloth;
a first operation portion (206) that is operated by foot by an operator;
a first determination portion (201) that determines whether the operator is operating the first operation portion (206);
a first drive portion (201) that, when the first determination portion (201) determines that the operator is operating the first operation portion (206), drives the supply portion (35) and the transport portion (24, 25) in accordance with a degree of operation of the first operation portion (206),
**characterized by**
a second operation portion (47) that is operated by hand by the operator;
a second determination portion (201) that determines whether the operator is operating the second operation portion (47); and
a second drive portion (201) that, when the first determination portion (201) determines that the operator is not operating the first operation portion (206) and the second determination portion (201) determines that the operator is operating the second operation portion (47), drives the supply portion (35) and the transport portion (24, 25) based on drive conditions of the supply portion (35) and the transport portion (24, 25) that are stored in a storage portion (99).

2. The cloth bonding apparatus according to claim 1, wherein
the transport portion (24, 25) presses and transports the cloth on a downstream side of the nozzle (45) in a transport direction of the cloth, and
the cloth bonding apparatus further comprises:
a detection portion (61) that detects the cloth on the upstream side of the nozzle (45) in the transport direction of the cloth;
a third drive portion (201) that, after a state in which the detection portion (61) detects the cloth changes to a state in which the detection portion (61) does not detect the cloth, drives the supply portion (35) and supplies the adhesive to the nozzle (45), and also drives the transport portion (24, 25) and transports the cloth by a first distance; and
a stop portion (201) that, after the third drive portion has driven the transport portion (24, 25) and transported the cloth by the first distance, stops the driving of the supply portion (35) and stops the supply of the adhesive to the nozzle (45), and also stops the driving of the transport portion (24, 25) and stops the movement of the cloth.

3. The cloth bonding apparatus according to claim 2, further comprising:
a third determination portion (201) that determines whether the operator is operating at least one of the first operation portion (206) and the second operation portion; wherein
during a period in which the third determination portion (201) determines that the operator is operating at least one of the first operation portion (206) and the second operation portion, the third drive portion drives the supply portion (35) and supplies the adhesive to the nozzle (45) and also drives the transport portion (24, 25) and moves the cloth by the first distance.

4. The cloth bonding apparatus according to claim 3, wherein
when the third determination portion (201) determines that the operator is operating the first operation portion (206), the third drive portion drives the supply portion (35) and the transport portion (24, 25) in accordance with the degree of operation of the first operation portion (206), and
when the third determination portion (201) determines that the operator is operating the second operation portion, the third drive portion drives the supply portion (35) and the transport portion (24, 25) based on the drive conditions that are stored in the storage portion (99).

5. The cloth bonding apparatus according to one of claims 2, 3 or 4, further comprising:
a fourth drive portion (201) that, after the stop portion stops the driving of the supply portion (35) and stops the supply of the adhesive to the nozzle (45), once more starts driving of the transport portion (24, 25) and transports the cloth by a second distance.

6. The cloth bonding apparatus according to claim 5, wherein during a period in which the third determination portion (201) determines that the operator is operating at least one of the first operation portion (206) and the second operation portion, the fourth drive portion (201) drives the transport portion (24, 25) and transports the cloth by the second distance.

7. The cloth bonding apparatus according to claim 5 or 6, wherein
when the third determination portion (201) determines that the operator is operating the first operation portion (206), the fourth drive portion (201) drives the supply portion (35) and the transport portion (24, 25) in accordance with the degree of operation of the first operation portion (206), and
when the third determination portion (201) determines that the operator is operating the second operation portion (47), the fourth drive portion (201) drives the supply portion (35) and the transport portion (24, 25) based on the drive conditions that are stored in the storage portion (99).

8. A bonding method, comprising the steps of:
determining whether an operator is operating a first operation portion (206) that is operated by foot;
driving a supply portion (35) that supplies adhesive to a nozzle (45) and a transport portion (24, 25) that transports a cloth, when it is determined that the operator is operating the first operation portion (206),
**characterized by** the steps of:
determining whether the operator is operating a second operation portion (47) that is operated by hand;
acquiring drive conditions that are stored in a storage portion (99); and
driving the supply portion (35) and the transport portion (24, 25) based on the drive conditions acquired from the storage portion (99), when it is determined that the operator is not operating the first operation portion (206) and it is determined that the operator is operating the second operation portion (47).

## Patentansprüche

1. Tuchfügegerät mit:
einer Düse (45), die ein Klebemittel auf ein Tuch auslässt;
einem Zuführabschnitt (35), der das Klebemittel zu der Düse (45) zuführt;
einem Transportabschnitt (24, 25), der das Tuch presst und transportiert;
einem ersten Betätigungsabschnitt (206), der durch einen Fuß eines Benutzers betätigt wird;
einem ersten Bestimmungsabschnitt (201), der bestimmt, ob der Benutzer den ersten Betätigungsabschnitt (206) betätigt;
einem ersten Antriebsabschnitt (201), der, wenn der erste Bestimmungsabschnitt (201) bestimmt, dass der Benutzer den ersten Betätigungsabschnitt (206) betätigt, den Zuführabschnitt (35) und den Transportabschnitt (24, 25) gemäß einem Betätigungsgrad des ersten Betätigungsabschnitts (206) antreibt,
**gekennzeichnet durch**
einen zweiten Betätigungsabschnitt (47), der **durch** die Hand eines Benutzers betätigt wird;
einen zweiten Bestimmungsabschnitt (201), der bestimmt, ob der Benutzer den zweiten Betätigungsabschnitt (47) betätigt; und
einen zweiten Antriebsabschnitt (201), der, wenn der erste Bestimmungsabschnitt (201) bestimmt, dass der Benutzer den ersten Betätigungsabschnitt (206) nicht betätigt, und wenn der zweite Bestimmungsabschnitt (201) bestimmt, dass der Benutzer den zweiten Betätigungsabschnitt (47) betätigt, den Zuführabschnitt (35) und den Transportabschnitt (24, 25) auf der Grundlage eines Antriebszustands des Zuführabschnitts (35) und des Transportabschnitts (24, 25) antreibt, der in einem Speicherabschnitt (99) gespeichert ist.

2. Tuchfügegerät gemäß Anspruch 1, wobei
der Transportabschnitt (24, 25) das Tuch an einer stromabwärtigen Seite der Düse (45) in einer Transportrichtung des Tuchs presst und transportiert, und
das Tuchfügegerät des Weiteren Folgendes aufweist:
einen Erfassungsabschnitt (61), der das Tuch an der stromaufwärtigen Seite der Düse (45) in der Transportrichtung des Tuchs erfasst;
einen dritten Antriebsabschnitt (201), der nach einem Zustand, bei dem der Erfassungsabschnitt (61) erfasst, dass das Tuch zu einem Zustand geändert wurde, bei dem der Erfassungsabschnitt (61) das Tuch nicht erfasst, den Zuführabschnitt (35) antreibt und das Klebemittel zu der Düse (45) zuführt und außerdem den Transportabschnitt (24, 25) antreibt und das Tuch um einen ersten Abstand transportiert; und
einen Stoppabschnitt (201), der den Antrieb des Zuführabschnitts (35) stoppt und die Zufuhr des Klebemittels zu der Düse (45) stoppt und außerdem den Antrieb des Transportabschnitts (24, 25) stoppt und die Bewegung des Tuchs stoppt, nachdem der dritte Antriebsabschnitt den Transportabschnitt (24, 25) angetrieben hat und das Tuch um den ersten Abstand transportiert hat.

3. Tuchfügegerät gemäß Anspruch 2, des Weiteren mit:
einem dritten Bestimmungsabschnitt (201), der bestimmt, ob der Benutzer zumindest den ersten Betätigungsabschnitt (206) oder den zweiten Betätigungsabschnitt betätigt; wobei
während einer Zeitperiode, in der der dritte Bestimmungsabschnitt (201) bestimmt, dass der Benutzer zumindest den ersten Betätigungsabschnitt (206) oder den zweiten Betätigungsabschnitt betätigt, der dritte Antriebsabschnitt den Zuführabschnitt (35) antreibt und das Klebemittel zu der Düse (45) zuführt und außerdem den Transportabschnitt (24, 25) antreibt und das Tuch um den ersten Abstand bewegt.

4. Tuchfügegerät gemäß Anspruch 3, wobei
wenn der dritte Bestimmungsabschnitt (201) bestimmt, dass der Benutzer den ersten Betätigungsabschnitt (206) betätigt, der dritte Antriebsabschnitt den Zuführabschnitt (35) und den Transportabschnitt (24, 25) gemäß dem Betätigungsgrad des ersten Betätigungsabschnitts (206) antreibt, und
wenn der dritte Bestimmungsabschnitt (201) bestimmt, dass der Benutzer den zweiten Betätigungsabschnitt betätigt, der dritte Antriebsabschnitt den Zuführabschnitt (35) und den Transportabschnitt (24, 25) auf der Grundlage der Antriebszustände antreibt, die in dem Speicherabschnitt (99) gespeichert sind.

5. Tuchfügegerät gemäß einem der Ansprüche 2, 3 oder 4, des Weiteren mit:
einem vierten Antriebsabschnitt (201), der den Antrieb des Transportabschnitts (24, 25) noch einmal startet und das Tuch um einen zweiten Abstand transportiert, nachdem der Stoppabschnitt den Antrieb des Zuführabschnitts (35) gestoppt hat und die Zufuhr des Klebemittels zu der Düse (45) gestoppt hat.

6. Tuchfügegerät gemäß Anspruch 5, wobei
während einer Zeitperiode, in der der dritte Bestimmungsabschnitt (201) bestimmt, dass der Benutzer zumindest den ersten Betätigungsabschnitt (206) oder den zweiten Betätigungsabschnitt betätigt, treibt der vierte Antriebsabschnitt (201) den Transportabschnitt (24, 25) an und transportiert das Tuch um den zweiten Abstand.

7. Tuchfügegerät gemäß Anspruch 5 oder 6, wobei
wenn der dritte Bestimmungsabschnitt (201) bestimmt, dass der Benutzer den ersten Betätigungsabschnitt (206) betätigt, treibt der vierte Antriebsabschnitt (201) den Zuführabschnitt (35) und den Transportabschnitt (24, 25) gemäß dem Betätigungsgrad des ersten Betätigungsabschnitts (206) an, und
wenn der dritte Bestimmungsabschnitt (201) bestimmt, dass der Benutzer den zweiten Betätigungsabschnitt (47) betätigt, der vierte Antriebsabschnitt (201) den Zuführabschnitt (35) und den Transportabschnitt (24, 25) auf der Grundlage der Antriebszustände antreibt, die in dem Speicherabschnitt (99) gespeichert sind.

8. Fügeverfahren mit den folgenden Schritten:
Bestimmen, ob ein Benutzer einen ersten Betätigungsabschnitt (206) betätigt, der durch einen Fuß betätigt wird;
Antreiben eines Zuführabschnitts (35), der ein Klebemittel zu einer Düse (45) zuführt, und eines Transportabschnitts (24, 25), der ein Tuch transportiert, wenn bestimmt wird, dass der Benutzer den ersten Betätigungsabschnitt (206) betätigt,
**gekennzeichnet durch** die folgenden Schritte:
Bestimmen, ob der Benutzer einen zweiten Betätigungsabschnitt (47) betätigt, der **durch** die Hand betätigt wird;
Akquirieren von Antriebszuständen, die in einem Speicherabschnitt (99) gespeichert sind; und
Antreiben des Zuführabschnitts (35) und des Transportabschnitts (24, 25) auf der Grundlage der Antriebszustände, die aus dem Speicherabschnitt (99) akquiriert werden, wenn bestimmt wird, dass der Benutzer den ersten Betätigungsabschnitt (206) nicht betätigt, und wenn bestimmt wird, dass der Benutzer den zweiten Betätigungsabschnitt (47) betätigt.

## Revendications

1. Dispositif de collage de tissu comprenant ;
un injecteur (45) qui injecte un adhésif sur un tissu ;
une partie d'alimentation (35) qui délivre l'adhésif à l'injecteur (45) ;
une partie de transport (24, 25) qui presse et transporte le tissu ;
une première partie d'activation (206) qui est activée au pied par un opérateur ; une première partie de détermination (201) qui détermine si l'opérateur active la première partie d'activation (206) ;
une première partie de commande (201) qui, lorsque la première partie de détermination (201) détermine que l'opérateur active la première partie d'activation (206), commande la partie d'alimentation (35) et la partie de transport (24, 25) en fonction d'un niveau d'activation de la première partie d'activation (206),
**caractérisé par** :
une seconde partie d'activation (47) qui est activée à la main par l'opérateur ;
une deuxième partie de détermination (201) qui détermine si l'opérateur active la seconde partie d'activation (47) ; et
une deuxième partie de commande (201) qui, lorsque la première partie de détermination (201) détermine que l'opérateur n'active pas la première partie d'activation (206) et la deuxième partie de commande (201) détermine que l'opérateur active la seconde partie d'activation (47), commande la partie d'alimentation (35) et la partie de transport (24, 25) sur la base de conditions de commande de la partie d'alimentation (35) et de la partie de transport (24, 25) qui sont mémorisées dans une partie de mémorisation (99).

2. Dispositif de collage de tissu selon la revendication 1, dans lequel :
la partie de transport (24, 25) presse et transporte le tissu sur un côté aval de l'injecteur (45) dans une direction de transport du tissu, et
le dispositif de collage de tissu comprend en outre :
une partie de détection (61) qui détecte le tissu sur le côté amont de l'injecteur (45) suivant la direction de transport du tissu ;
une troisième partie de commande (201) qui, après un état dans lequel la partie de détection (61) détecte que les changements de tissu vers un état dans lequel la partie de détection (61) ne détecte pas le tissu, commande la partie d'alimentation (35) et délivre l'adhésif à l'injecteur (45), et commande aussi la partie de transport (24, 25) et transporte le tissu sur une première distance ; et
une partie d'arrêt (201) qui, après que la troisième partie de commande a entraîné la partie de transport (24, 25) et transporté le tissu sur la première distance, arrête la commande de la partie d'alimentation (35) et arrête la distribution de l'adhésif à l'injecteur (45), et arrête aussi la commande de la partie de transport (24, 25) et arrête le mouvement du tissu.

3. Dispositif de collage de tissu selon la revendication 2, comprenant en outre :
une troisième partie de détermination (201) qui détermine si l'opérateur active au moins l'une de la première partie d'activation (206) et de la seconde partie d'activation ; dans lequel :
au cours d'une période pendant laquelle la troisième partie de détermination (201) détermine que l'opérateur active au moins l'une de la première partie d'activation (206) et de la seconde partie d'activation, la troisième partie de commande commande la partie d'alimentation (35) et délivre l'adhésif à l'injecteur (45) et commande aussi la partie de transport (24, 25) et déplace le tissu sur la première distance.

4. Dispositif de collage de tissu selon la revendication 3, dans lequel :
lorsque la troisième partie de détermination (201) détermine que l'opérateur active la première partie d'activation (206), la troisième partie de commande commande la partie d'alimentation (35) et la partie de transport (24, 25) en fonction du niveau d'activation de la première partie d'activation (206), et
lorsque la troisième partie de détermination (201) détermine que l'opérateur active la seconde partie d'activation, la troisième partie de commande commande la partie d'alimentation (35) et la partie de transport (24, 25) sur la base des conditions de commande qui sont stockées dans la partie de stockage (99).

5. Dispositif de collage de tissu selon l'une des revendications 2, 3 ou 4, comprenant en outre :
une quatrième partie de commande (201) qui, après que la partie d'arrêt a arrêté la commande de la partie d'alimentation (35) et a arrêté la fourniture de l'adhésif à l'injecteur (45), démarre une fois de plus la commande de la partie de transport (24, 25) et transporte le tissu sur une seconde distance.

6. Dispositif de collage de tissu selon la revendication 5, dans lequel :
au cours d'une période dans laquelle la troisième partie de détermination (201) détermine que l'opérateur active au moins l'un de la première partie d'activation (206) et de la seconde partie d'activation, la quatrième partie de commande (201) commande la partie de transport (24, 25) et transporte le tissu sur la seconde distance.

7. Dispositif de collage de tissu selon la revendication 5 ou 6, dans lequel :
lorsque la troisième partie de détermination (201) détermine que l'opérateur active la première partie d'activation (206), la quatrième partie de commande (201) commande la partie d'alimentation (35) et la partie de transport (24, 25) en fonction du niveau d'activation de la première partie d'activation (206), et
lorsque la troisième partie de détermination (201) détermine que l'opérateur active la seconde partie d'activation (47), la quatrième partie de commande (201) commande la partie d'alimentation (35) et la partie de transport (24, 25) sur la base des conditions de commande qui sont mémorisées dans la partie de mémorisation (99).

8. Procédé de collage, comprenant les étapes de :
détermination du fait qu'un opérateur active une première partie d'activation (206) qui est activée par le pied ;
commande d'une partie d'alimentation (35) qui délivre de l'adhésif à un injecteur (45) et d'une partie de transport (24, 25) qui transporte un tissu, lorsqu'il est déterminé que l'opérateur active la première partie d'activation (206),
**caractérisé par** les étapes de :
détermination du fait que l'opérateur active une seconde partie d'activation (47) qui est activée à la main ;
acquisition de conditions de commande qui sont mémorisées dans une partie de mémorisation (99) ; et
commande de la partie d'alimentation (35) et de la partie de transport (24, 25) sur la base des conditions de commande acquises à partir de la partie de mémorisation (99), lorsqu'il est déterminé que l'opérateur n'active pas la première partie d'activation (206) et qu'il est déterminé que l'opérateur active la seconde partie d'activation (47).
